# EUROPÄISCHE PATENTSCHRIFT

(11) **EP 3 046 118 B1**
(45) Veröffentlichungstag und Bekanntmachung des Hinweises auf die Patenterteilung: **13.09.2017**
(21) Anmeldenummer: 15197725.3
(22) Anmeldetag: 26.05.2009
(51) Int. Cl.: H01C 7/12, H02H 3/08, H02H 9/04

(54) **ÜBERSPANNUNGSABLEITER MIT INTEGRIERTER SCHUTZVORRICHTUNG**
SURGE ARRESTER COMPRISING AN INTEGRATED PROTECTION DEVICE
PARAFOUDRE À DISPOSITIF DE PROTECTION INTÉGRÉ

(30) Priorität: 30.05.2008 DE 102008025918; 12.01.2009 DE 102009004318
(43) Veröffentlichungstag der Anmeldung: 20.07.2016
(62) Teilanmeldung aus: 09753871.4
(73) Patentinhaber: DEHN + SÖHNE GMBH + CO KG, 92318 Neumarkt/Opf (DE)
(72) Erfinder: Ehrhardt, Arnd, 92318 Neumarkt/Opf. (DE); Schreiter, Stefanie, verstorben (DE); Biohlawek, Jürgen, 07639 Bad Klosterlausnitz (DE); Grützmann, Dieter, 07646 Stadtroda (DE); Letzsch, Wolf-Rüdiger, 07646 Stadtroda (DE); Kretzschmar, Joachim, 07629 Hermsdorf (DE)
(74) Vertreter: Kruspig, Volkmar

(56) Entgegenhaltungen:
- DE-A1-102006 008 644
- US-A- 4 068 281
- US-A- 4 271 446
- US-A- 4 459 632
- US-A- 5 379 176
- US-A1- 2005 206 493

## Beschreibung

Die Erfindung betrifft einen Überspannungsableiter mit integrierter Schutzvorrichtung, insbesondere gegen langandauernde, netzfrequente Überspannungen (TOV), umfassend mindestens einen Varistor und einen Kaltleiter (PTC-Widerstand), welcher mit dem Varistor in thermischem Kontakt steht und wobei Varistor und Kaltleiter elektrisch in Reihe geschaltet sind, gemäß Oberbegriff des Patentanspruchs.

Kombinationen im Sinne einer Reihenschaltung von spannungsschaltenden Überspannungsschutzelementen, wie Funkenstrecke oder Gasentladungsableiter, mit einem niedrigen Folgestromlöschvermögen und einem Kaltleiter sind vorbekannt. So zeigt die DE 24 05 671 A1 eine derartige Anwendung für Gleichströme. Beim Ansprechen des dortigen Schutzelements ändert der Kaltleiter durch den fließenden Folgestrom seinen Widerstand sprungartig und senkt somit den Strom auf kleinere Werte ab, so dass das Überspannungsschutzelement diesen Strom nun selbsttätig löschen kann. Hauptkontakte einer Funkenstrecke werden vor Verschweißen geschützt. Der Kaltleiter muss gemäß diesem Stand der Technik eine Spannungsfestigkeit besitzen, welche nahezu der Überlast entspricht, da die Restspannung des spannungsschaltenden Schutzelements vernachlässigbar ist.

Gemäß diesem Stand der Technik kann das Überspannungsschutzelement in engem Wärmekontakt mit dem Kaltleiter angeordnet werden, so dass ein Teil der im Überspannungsbegrenzer erzeugten Wärme auf den Kaltleiter übertragen wird. Der Nachteil der vorbekannten Lösung besteht jedoch darin, dass nicht immer der gewünschte Schutzpegel eingehalten werden kann, so dass in Parallelschaltungen eine Grobschutzfunkenstrecke einzusetzen ist.

Bei Geräten und Anlagen der Nachrichtentechnik haben sich Schaltungskombinationen aus Varistoren und Kaltleitern zum kombinierten Schutz des Verbrauchers für Überspannung und Überstrom bewährt. Bei derartigen Anordnungen befindet sich der Kaltleiter üblicherweise im Längszweig, wodurch der Verbraucher vor Überströmen geschützt wird.

Die DE 32 31 066 A1 offenbart eine Anordnung, bei der einem zum Verbraucher parallel geschalteten Varistor beiderseits scheibenförmig keramische Kaltleiter zugeordnet sind. Zwischen den einzelnen Elementen sind jeweils großflächige, blechförmige Stromzuführungen vorhanden, welche durch einen, über dem gesamten Paket angeordneten Klemmkontakt eine thermische und elektrische Kopplung herstellen und die thermische Abkühlzeit verringern.
Bei einem Überstrom werden die Kaltleiter warm und erhöhen die Leitfähigkeit des Varistors. Bei einer Überspannung wird der Varistor ebenfalls niederohmig und schützt somit den Verbraucher.
Nachteilig bei diesem Stand der Technik ist, dass die beiden Kaltleiter im Längszweig angeordnet sind und somit ständig vom Betriebsstrom durchflossen werden. Der Schutzpegel wird nur vom Varistor im Querzweig bestimmt. Des wieteren werden durch die zusätzlichen Stromzuführungen zwischen den einzelnen Elementen, welche ebenfalls den Betriebsstrom dauerhaft führen müssen, zusätzliche Wärmekapazitäten in die Anordnung eingebracht, wodurch sich die thermischen Reaktionszeiten verschlechtern. Zusätzlich kann der betreffende Varistor bei einem Fehlerfall nicht abgeschaltet werden, was zu einem undefinierten Fehlerzustand oder zu einer Brandgefahr für benachbarte Teile führt.

Gemäß dem Gebrauchsmuster DE 92 11 808 U1 soll durch die Reihenschaltung von Kaltleiter und Varistor ein ausreichend großer Spannungsabfall entstehen, um eine parallele Funkenstrecke vor einer energetischen Überlastung des Varistors zu zünden. Bei hohen bzw. andauernden Impulsströmen erzeugt der Kaltleiter einen zusätzlichen Spannungsabfall, wodurch die parallele Funkenstrecke gezündet wird.

In der DE 196 23 541 A1 ist eine Reihenschaltung von einem Varistor und einer thermisch gekoppelten Impedanz erläutert. Wenn es dort infolge von Überspannungen zu einem erhöhten Leckstrom kommt, droht dem Varistor eine thermische Überlastung. Bei einer derartigen Überlastung des Varistors wird durch den zusätzlichen Spannungsabfall über der Impedanz die Grenzspannung eines weiteren Varistors erreicht, welcher den Leckstrom und die Energieaufnahme reduziert. Die Impedanz kann z.B. als Sicherung, reversible Sicherung, Trenner oder Funkenstrecke realisiert werden. Es liegt demnach eine Schutzschaltung eines Varistors mit niedriger Grenzspannung vor, so dass z.B. die Anlagenisolation nur auf eine kleinere Grenzspannung auszulegen ist. Allerdings kann es auch bei dieser Lösung zu einer Überlastung des zweiten Varistors mit der höheren Grenzspannung kommen.

Die US 4,271,446 B widmet sich diesem oben erwähnten Fehlerfall. Dort wird eine Parallelschaltung mehrerer Varistoren mit verschiedenen Grenzspannungen offenbart, wobei zwei der Varistoren einen Kaltleiter in Reihe aufweisen. Es werden dabei paarweise ein Varistor und ein Kaltleiter mit zusätzlichen Mittenabgriffen über eine Lötmasse verbunden. Wenn nun der erste Varistor mit der niedrigsten Grenzspannung zu überlasten droht, erwärmt sich der Kaltleiter derart, dass er in einen annähernden nichtleitenden Zustand übergeht, so dass der Strom über den nächst höher gelegenen Varistor fließt. Wenn ein dritter Varistor ebenfalls einen unzulässig hohen Leckstrom führt, wird die gesamte Parallelschaltung durch eine Sicherung im Querzweig vom Netz getrennt. Bei diesem Stand der Technik ist der paarweise Aufbau für die Temperaturverteilung in den einzelnen Komponenten nachteilig. Durch notwendige Mittenabgriffe werden zusätzliche Wärmekapazitäten eingebracht, die die thermische Reaktionszeit der Gesamtanordnung ungewollt erhöhen.

Aus der US 2005/0206493 A1 ist ein Metalloxidvaristor vorbekannt, welcher physikalisch und elektrisch mit einem wärmeempfindlichen Material verbunden ist, dessen Eigenschaften sich temperaturabhängig verändern. Insbesondere dann, wenn die Temperatur des Metalloxidvaristors (MOV) in einen Bereich gelangt, bei dem die Gefahr der Zerstörung des Varistors besteht, bildet sich ein hochimpedantes Verhalten aus, so dass der Varistor geschützt wird. Mit Erwärmung des Varistors erhitzt sich auch das wärmeempfindliche Material. Infolgedessen entfernt es sich von der Oberfläche des Varistors und bildet eine Funkenstrecke, die elektrisch in Serie mit dem Varistor liegt, so dass sich die bereits erwähnte Schutzfunktion einstellt.

Aus dem Vorgenannten ist es daher Aufgabe der Erfindung, einen weiterentwickelten Überspannungsableiter mit integrierter Schutzvorrichtung, insbesondere gegen langandauernde, netzfrequente Überspannungen anzugeben, wobei der mindestens eine eingesetzte Varistor schadenfrei bleibt und sich dadurch die Lebensdauer und die Langzeitstabilität des Überspannungsableiters insgesamt erhöht.

Die Lösung der Aufgabe der Erfindung erfolgt durch die Merkmalskombination des Anspruchs.

Es ist demnach eine Schutzvorrichtung für Überspannungsableiter, bevorzugt mit Varistoren Gegenstand der Erfindung, wobei der Ableiter bei einer Überlastgefahr durch Ansprechen eines thermisch gekoppelten Kaltleiters, welcher die Energieaufnahme des Varistors begrenzt, vor seiner Zerstörung geschützt ist. Erfindungsgemäß ist es, die vorstehend erwähnte Schutzmaßnahme in Kombination mit einer thermischen Abtrennvorrichtung zu verwenden, die ebenfalls erfindungsgemäß weitergebildet ist.

Die vorstehend erwähnten Scheiben oder Elemente werden dann direkt z.B. durch Kleben, Löt- oder Sintervorgänge mit- und untereinander verbunden, um das Einbringen ungewollter schädlicher Wärmekapazitäten zu vermeiden.

Der eingesetzte Kaltleiter schränkt den Varistor in seiner Grundfunktion als Ableiter für Überspannungen nicht ein. Dies wird dadurch erreicht, dass der Widerstand des Kaltleiters unter Normalbedingungen bei Impulsbelastung extrem niedrig ist und sich bei diesen Bedingungen auch nicht oder nur unwesentlich erhöht.

Bei beginnender Überlastung des Varistors erwärmt sich dieser, wodurch der Widerstand des Kaltleiters gesteuert wird, so dass letztendlich die Energieaufnahme des Varistors reduziert bzw. diese begrenzt wird.

Falls eine durch Überlastung verursachte Alterung irreversibel vorangeschritten ist, erwärmt sich die gesamte Anordnung derart, dass eine in Kombination vorgesehene, integrierte thermische Abtrennvorrichtung sich öffnet und hierdurch den Ableiter vom Netz trennt.

Die Kaltleiterscheibe weist bevorzugt einen Kaltwiderstand von 0,05 Ω bis 0,3 Ω bei einer Umgebungstemperatur von ca. 25°C auf.

Weiterhin ist der Kaltwiderstand des Kaltleiters spannungsabhängig und sinkt bei Belastung mit Hochstromimpulsen.

Dem Grundgedanken der Erfindung folgend, soll die keramische Scheibe des Kaltleiters selbst eine geringe Wärmekapazität aufweisen.

Die Gesamtdicke der Sandwichanordnung soll erfindungsgemäß ≤ 10 mm betragen. Hierbei liegt der Volumenanteil der Varistorscheiben bezogen auf die Gesamtstruktur im Bereich von ca. 40% bis 80%.

Die Teilvaristoren, d.h. die Varistorscheiben, können auch asymmetrisch ausgeführt werden.

Dabei wird nur einer der Varistorscheiben die in Kombination mögliche thermische Abtrennvorrichtung, die in bekannter Art ausgebildet ist, zugeordnet.

Die thermische Abtrennvorrichtung ist bevorzugt auf einer bezüglich des thermischen Kontakts optimierten Seite einer der Varistorscheiben angeordnet.

Eine derartige thermisch optimierte Anschlussstelle besitzt geeignete Wärmeisolationen, so dass die in der Anordnung entstehende Wärme überwiegend zum Schmelzen der Abtrennvorrichtung genutzt werden kann. Solche Wärmeisolationen können beispielsweise durch ein elektrisch gut, aber thermisch schlecht leitendes Material geschaffen werden.

Die der thermisch optimierten Seite gegenüberliegende Varistorscheibe weist eine nach außen wirkende wärmeisolierende oder wärmestoppende Beschichtung auf oder ist mit ähnlich wärmeisolierenden Mitteln ausgestattet.

Bei einer Ausgestaltung der Erfindung kann der Sandwichanordnung ein Gasableiter oder eine Funkenstrecke für eine bevorzugte Anwendung im Gleichspannungsbereich in Reihe geschaltet werden.

Auch besteht die Möglichkeit der Anordnung einer Reihenschaltung mehrerer Sandwichanordnungen aus Varistorscheiben und Kaltleiterscheiben.

Die Kaltleiterscheibe ist so ausgestaltet, dass deren maximale Temperatur größer als die Schmelz- oder Reaktionstemperatur der optional einsetzbaren thermischen Abtrennvorrichtung ist.

Erfindungsgemäß ist nur eine Varistorscheibe mit einer keramischen Scheibe mit Kaltleiterverhalten in Sandwichbauweise ausgeführt, wobei einem der Elemente eine an sich bekannte thermische Abtrennvorrichtung zugeordnet ist. Das jeweils andere Element weist dann eine äußere Wärmeisolation auf, um umgesetzte Wärmeenergie primär dem Kaltleiter und der Abtrennvorrichtung zuzuführen.

Die Erfindung soll nachstehend anhand eines Ausführungsbeispiels sowie unter Zuhilfenahme von Figuren näher erläutert werden.

Hierbei zeigen:
- Fig. 1: ein Prinzipschaltbild der Reihenschaltung eines Varistors mit einer thermischen, unter Federvorspannung stehenden Abtrennvorrichtung des Standes der Technik und eine prinzipielle Ausführungsform einer solchen thermischen Abtrennvorrichtung, die auf einer Seite einer Varistorscheibe befindlich ist;
- Fig. 2a: eine Schnittdarstellung eines prinzipiellen Aufbaus einer Sandwichanordnung;
- Fig. 2b: eine Prinzip-Schnittdarstellung einer weiteren Ausführungsform der Sandwichanordnung mit Varistorscheiben, die bezogen auf eine mittig angeordnete Kaltleiterscheibe eine kleinere Querschnittsfläche aufweisen;
- Fig. 3: eine Darstellung von Strom-Zeit-Verhältnissen der Anordnung;
- Fig. 4: eine Darstellung der Spannungsverteilung über der Anordnung und
- Fig. 5: eine erfindungsgemäße Ausführungsform mit kombinierter Abtrennvorrichtung und einem Thermostop-Mittel.

Wie bereits eingangs dargelegt, ist es Ziel der Erfindung, einen Varistorableiter zu schützen und eine gezielte Steuerung des Abtrennverhaltens, insbesondere bei netzfrequenter Überspannung zu gewährleisten.

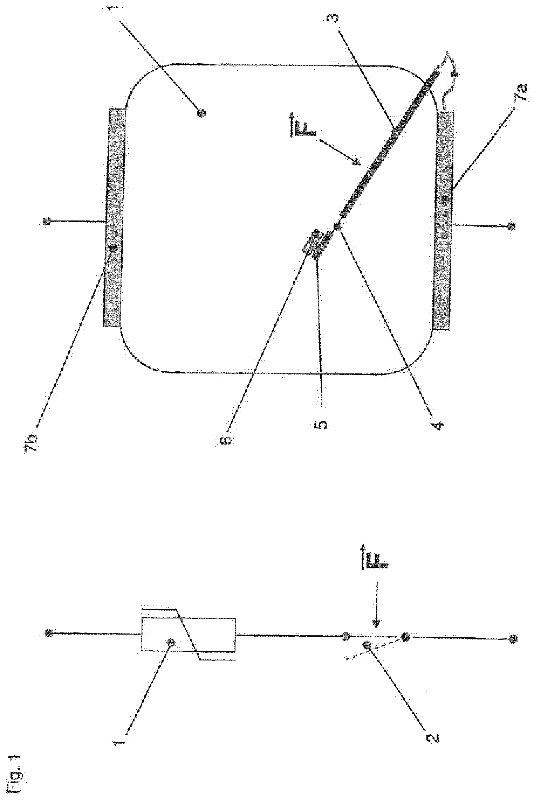

Die in der Fig. 1 gezeigte bekannte Anordnung besteht aus einem Varistor 1 mit einer integrierten thermischen Abtrennvorrichtung 2, die z.B. durch eine Schaltzunge realisiert ist, welche unter Federvorspannung steht. Die Schaltzunge wird mit Hilfe eines Lotmaterials an einem Kontakt befestigt, wie dies die rechte Darstellung gemäß Fig. 1 zeigt.

Das Lotmaterial ist hier mit dem Bezugszeichen 5 und der Gegenkontakt mit dem Bezugszeichen 6 symbolisiert. Die Schaltzunge oder ein beweglicher Kontaktarm 3 ist mit einem Varistoranschluss 7a verbunden und wird durch eine Federkraft vom entgegengesetzten Varistorkontakt 6 weg bewegt, so dass eine ausreichend große Trennstrecke entsteht und der Varistor sicher vom Netz trennbar ist. Üblicherweise besteht der Varistor 1 aus einer Metalloxidscheibe, die beidseitig Kontakte 7a, 7b besitzt. Im Normalfall sind beide Kontakte 7a, 7b über den beweglichen, unter Federvorspannung F stehenden Kontaktarm 3 miteinander verbunden. Im Fehlerfall erwärmt sich der Varistor und damit die Lotstelle 5 bis zur Schmelztemperatur, wodurch der Kontaktarm 3, wie erläutert, freigegeben wird.

Eine dargestellte geometrische Engstelle 4 im beweglichen Kontaktarm dient der Abschaltung bei Impulsbelastung über Nennwert, wobei die Engstelle adiabatisch zerstört wird und der Ableiter hier ebenfalls sicher vom Netz trennbar ist.

Der in Fig. 1 gezeigte Überspannungsableiter mit Varistor und thermischer Abtrennvorrichtung genügt bei zahlreichen Anwendungen den relevanten Anforderungen.
In Versorgungsnetzwerken mit ungewöhnlich hohen und langandauernden, meist netzfrequenten Überspannungen, sogenannten TOV, können derartige Ableiter allerdings schnell überlastet werden. Unter diesen Bedingungen ist die thermische Abtrennvorrichtung häufig aufgrund der hohen Wärmekapazität und der guten Wärmeleitung der Verbindungen zu träge. Die thermische Abtrennvorrichtung reagiert in diesen Störfällen meist verzögert und erst nach einer Schädigung des Varistors. In der erfindungsgemäßen Ausführungsform jedoch wird auch unter extremen Belastungen einer TOV ein wirksamer Schutz des Varistors gewährleistet. Dies ist dadurch gegeben, dass einerseits die Strombelastung des Varistors bei diesen Bedingungen begrenzt wird und andererseits die Abstimmung der thermischen Kopplung zwischen dem Varistor und der thermischen Abtrennvorrichtung unter Beibehaltung eines bewährten und einfachen Funktionsprinzips einer Optimierung unterliegt.

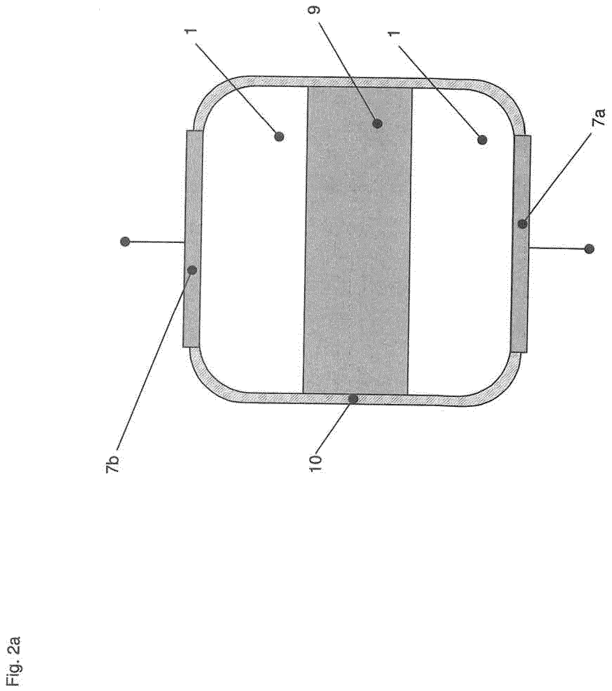

Die Fig. 2a zeigt einen prinzipiellen Aufbau der Sandwichanordnung.

Ein Varistor wird hier durch zwei Scheiben 1 gebildet respektive unterteilt.

Zwischen den beiden keramischen Varistorscheiben 1 befindet sich eine wietere keramische Scheibe 9 mit Kaltleiterverhalten.

Die Elemente werden direkt und ohne Zwischenlage, wie z. B. ein Kontaktblech, miteinander verbunden.

Auch das Verlöten, Sintern und ähnliche Methoden zum Erhalt eines kompletten Ableiterpakets mit den beiden Anschlussblechen 7a und 7b in einem einzigen Herstellungsprozess sind denkbar.

Die Elemente 1 und 9 sind in einer Reihenschaltung im Querzweig zum entsprechenden Verbraucher (nicht gezeigt) angeordnet.

Durch diese Anordnung kann die im Varistor 1 umgesetzte Energie sehr schnell den Kaltleiter 9 von beiden Seiten direkt erwärmen. Der Kaltleiter 9 wird weder durch Kontaktbleche noch durch eine Konvektion gekühlt. Die Temperatur des Kaltleiters kann somit bei geringer eigener Wärmekapazität unmittelbar dem Temperaturverlauf des Varistormaterials folgen.

Die Dimensionierung der Gesamtanordnung ist so gewählt, dass unter normalen Betriebsbedingungen der quasi geteilte Varistor genauso arbeitet wird ein Varistor aus einem einzigen monolithischen Block. Der Kaltleiter 9 leistet auch bei wiederholter Impulsbelastung nur einen geringen Beitrag zum Schutzpegel. Dies wird durch einen sehr geringen Kaltwiderstand des Kaltleiters 9 erreicht. Vorteilhaft ist, dass der Kaltwiderstand des Kaltleiters seinerseits spannungsabhängig ist und bei Belastung mit Hochstromimpulsen mindestens um den Faktor 2 bis 5 kleiner wird.

Der Varistor 1 wird bei Belastungen mit Stoßstromimpulsen im Nennableitbereich niederohmig und leitet den Impuls ab, so dass nur ein verträglicher Energieumsatz innerhalb des Varistors stattfindet. Unter diesen Bedingungen erwärmt sich der Varistor 1 nur in einem begrenzten Maß und er koppelt nur so viel Wärme in den Kaltleiter 9 ein, dass dieser im niederohmigen Zustand unterhalb seiner Bezugs- oder Sprungtemperatur verbleibt.

Bei einer Belastung durch eine netzfrequente Überspannung erhöht sich der Leckstrom des Varistors 1 merklich. Infolge dieses erhöhten Leckstroms erwärmen sich die beiden Varistorteile 1 und durch die geometrisch günstige Anordnung im Sandwich wird der mittig platzierte Kaltleiter 9 von beiden Seiten durch die Verlustleistung der Varistoren 1 ebenfalls erwärmt. Die Eigenerwärmung des Kaltleiters durch den erhöhten Stromfluss weist dabei nur eine untergeordnete Rolle auf.

Durch die zunehmende passive Erwärmung des Kaltleiters überschreitet dieser seine Sprungtemperatur. Er erhöht schlagartig seinen Widerstand und begrenzt so die Höhe des Leckstroms und damit die Energieaufnahme der gesamten Anordnung. Nach dem Abklingen der transienten Überspannung kühlen sich der Kaltleiter 9 und die Varistoren 1 wieder ab und die Anordnung ist erneut einsatzbereit.

Wie dargelegt, wird bewusst auf das Einbringen zusätzlicher Kontaktbleche zwischen den einzelnen Elementen verzichtet, um so die Wärmekapazität innerhalb der Anordnung auf die relevanten Teile zu reduzieren und somit kleine thermische Reaktionszeiten zu gewährleisten.

Das Sandwichpaket ist außenseitig im Bereich außerhalb der Anschlüsse 7a und 7b mit einer Isolation 10 versehen.

Die Unterteilung des Varistors 1 in mindestens zwei Teilvaristoren mit mindestens einer Zwischenlage eines Kaltleiters 9 ermöglicht insbesondere bei prozentual kleiner Wärmekapazität des Kaltleiters 9 im Verhältnis zum gesamten Aufbau eine vernachlässigbare Temperaturdifferenz zwischen den aktiven Elementen Varistor und Kaltleiter.

Dadurch, dass die Temperatur des Kaltleiters 9 selbst bei sehr schnellen Überlastwechseln unmittelbar der Temperatur des Varistors 1 folgt, ist eine optimale Anpassung der Schutzfunktion nahezu belastungsunabhängig möglich.

Die Bezugstemperatur und die Kennlinie des Kaltleiters können optimal auf das Varistormaterial und die technischen Daten der Varistoranordnung abgestimmt werden.
Es ist hier weder notwendig, ein Temperaturgefälle noch nennenswerte Verzögerungszeiten bis zum Erreichen der maximalen Temperatur zu berücksichtigen.

Durch die annähernd gleiche Temperatur von Kaltleiter und Varistor ist es optional möglich, die Teilvaristoren z.B. mit Hilfe von Anschlussblechen großer Wärmekapazität und hoher Wärmeleitung von außen stark zu kühlen. Auch dies erhöht die Langzeitstabilität der Anordnung und verbessert das Leistungsvermögen des Varistors sowohl bei schnellen Belastungsfolgen als auch bei sehr hohen oder andauernden Belastungen. Umgekehrt kann das Prinzip selbstverständlich auch bei Anordnungen mit geringer Wärmekapazität bzw. Wärmeleitfähigkeit im Anschlussbereich des aktiven Elements angewendet werden.

Die Schutzfunktion des Kaltleiters 9 wird bei der vorgeschlagenen Lösung und bei einer Schaltenergie, welche dem Leistungsvermögen des Varistors 1 angepasst ist, erst durch die Eigenerwärmung des Varistors 1 aktiviert.

Folgende Dimensionierungen haben sich als vorteilhaft herausgestellt.

Die maximale zulässige Temperatur des Kaltleiters im Überlastfall von beispielsweise 180°C oder größer ist so zu wählen, dass die Bildung von sogenannten Hot-Spots vermieden und das Varistorgefüge keinen Beschädigungen unterliegt. Die Bezugstemperatur des Kaltleiters, beispielsweise im Bereich von 50°C bis 120°C, ist unter Beachtung der zulässigen Betriebstemperatur des Gerätes und der Eigenerwärmung des Varistors im Nennleistungsbereich möglichst weit unterhalb einer den Varistor schädigenden Temperatur liegend.

Die erläuterte Sandwichanordnung, bestehend aus mindestens zwei Varistoren und mindestens einem Kaltleiter ist, wie bereits dargelegt, analog zu üblichen Varistorableitern an den nicht metallisierten Randbereichen geeignet gegen einen Überschlag isoliert, und zwar beispielsweise durch einen isolierenden Lack 10 oder ähnliche Mittel.

Die Geometrie und die Abmessungen der Querschnittsflächen von Kaltleiter 9 und Varistorteilen 1 sind für eine einfache Montage möglichst gleich gewählt.

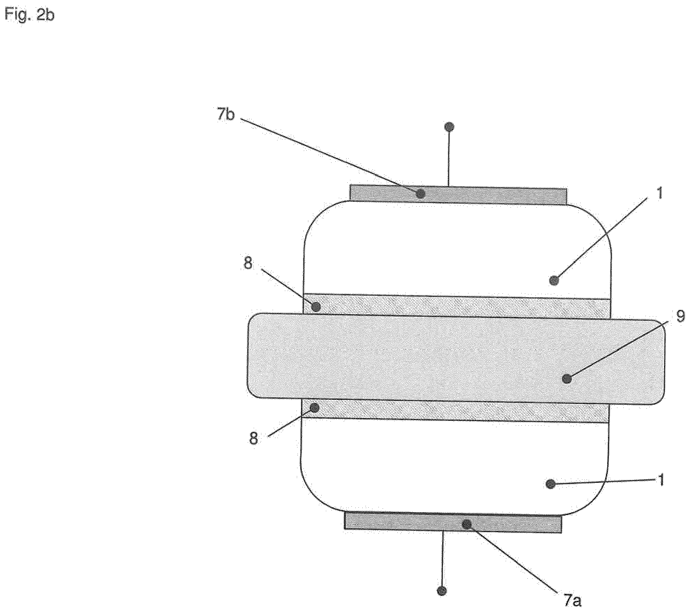

Fig. 2b zeigt eine weitere Ausführungsform. Bei dieser Ausführungsform besitzen die beiden Varistorscheiben 1 mit ihren äußeren Anschlüssen 7a und 7b eine kleinere Querschnittsfläche als die mittig angeordnete Kaltleiterscheibe 9. Trotz der leicht erhöhten Wärmekapazität des Kaltleiters 9 bei dieser Ausführungsform bestehen Vorteile. Durch die erhöhte Querschnittsfläche des Kaltleiters 9 können die Varistorseiten, welche dem Kaltleiter zugewandt sind, vollständig mit einer Metallisierung 8 versehen werden. Dabei ist die Metallisierung 8 ausschließlich im Bereich der Varistorscheibe entsprechend der Fig. 2b vorzusehen. Durch den Überstand des Kaltleiters 9 wird trotz der Metallisierung 8 das Überschlagsverhalten der Anordnung optimiert und es kann die Wärmekopplung vollständig ausgenutzt werden. Weiterhin kann die Leistungsfähigkeit des Kaltleiters durch eine Erhöhung der Querschnittsfläche verbessert werden. Eine nicht dargestellte äußere Isolation ist hier ohne weiteres anbringbar.

Überspannungsableiter sind überwiegend in Gehäusen zur Hutschienenmontage mit wechselbaren Steckmodulen und einer maximalen Dicke von 18 mm verbaut.

Um die erfindungsgemäße Anordnung in ein derartiges steckbares Modul integrieren zu können, soll die Dicke der Elemente 1 und 9 mit den äußeren Kontaktblechen 6 und 7 zusammen einen Wert von 10 mm nicht übersteigen, wobei der Varistor bevorzugt einen Volumenanteil im Bereich von 40% bis 80% der Gesamtanordnung innehat.

Es müssen die beiden Teilvaristoren nicht die gleiche Dicke bzw. den gleichen mA-Punkt besitzen. Zugunsten der Optimierung und Steuerung der Wärmeverteilung kann eine asymmetrische Aufteilung oder Gestaltung vorteilhaft sein, insbesondere in Kombination mit einer an sich bekannten thermischen Abtrennvorrichtung.

Der in die Anordnung integrierte Kaltleiter weist bevorzugt einen Kaltwiderstand von 0,05 Ω bis 0,30 Ω bei einer Umgebungstemperatur von etwa 25°C auf. Der maximale Widerstand bei maximaler Temperatur des Kaltleiters von beispielsweise 180°C liegt im Bereich von 10 kΩ bis einigen 100 kΩ.
Die Dimensionierung der Gesamtanordnung erfolgt derart, dass ein Widerstand im Bereich von 100 Ω bis mehreren 1000 Ω ausreichend ist, um die Aktivierungstemperatur der Abtrennvorrichtung zu erreichen. Im reversiblen Arbeitsbereich, bei dem eine Abtrennung des Varistors 1 nicht notwendig ist, besitzt der Kaltleiter 9 bevorzugt einen Widerstandswert von 10 Ω bis zu wenigen 100 Ω, um den Strom ausreichend zu reduzieren.

Der Kaltleiter weist eine Schaltenergie im Bereich von 100 J bis zum maximal zulässigen Energieeintrag (2 ms-Wert) des verwendeten Varistors sowie ein Impulstragvermögen im Bereich von mehreren kA der Impulsformen 8/20 µs und 10/350 µs auf.

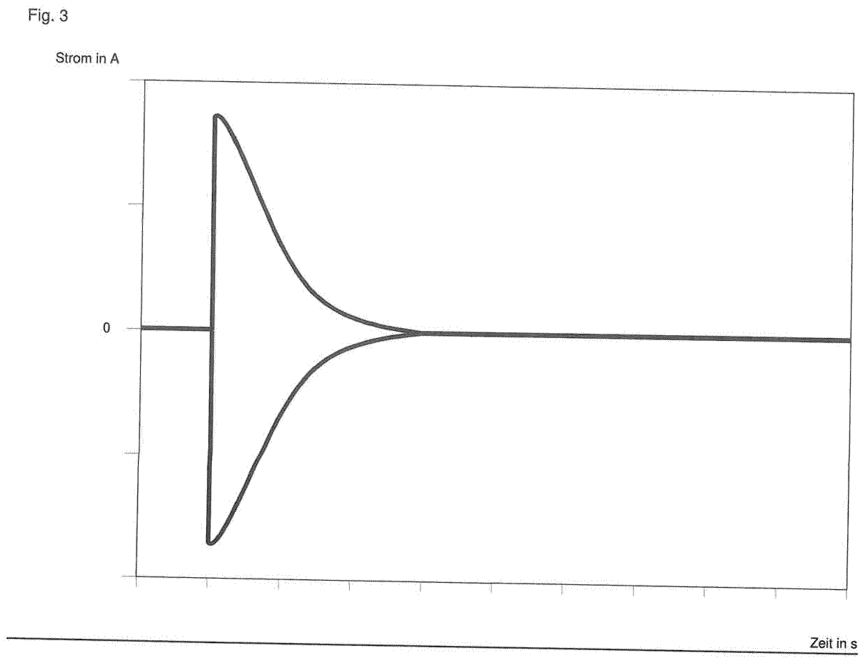

Wenn bei der Anordnung erhöhte Fehlerströme infolge einer beginnenden Alterung bzw. einer transienten Überspannung auftreten, besitzt der Kaltleiter 9 eine derartig hohe Reaktionsgeschwindigkeit, dass die Amplituden des Leckstroms analog der vereinfachten Darstellung in Fig. 3 innerhalb einiger 10 ms bei entsprechend hoher Überlast auf mindestens die Hälfte des Anfangswerts reduziert werden können. Die Fig. 3 zeigt hier die Einhüllende der entsprechenden Amplituden im Wechselstromsystem.

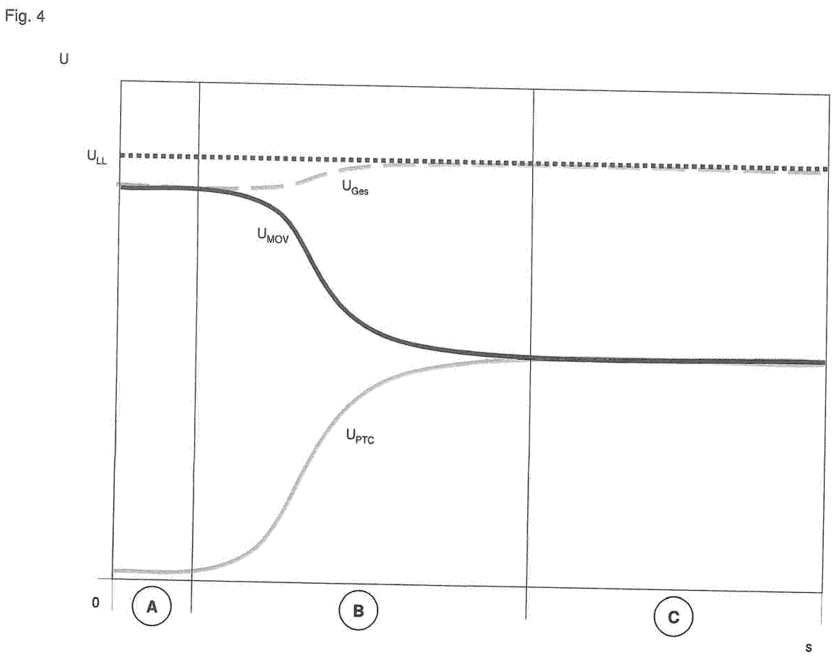

Ähnlich wie die Stromverhältnisse nach Fig. 3 ändert sich auch die Spannungsverteilung über der Anordnung. Fig. 4 zeigt prinzipiell die Spannungen über dem Varistor und dem Kaltleiter (Darstellung bei verketteter Spannung).

Verkettete Spannungen können z.B. in Netzen mit isoliertem Sternpunkt auftreten. In solchen IT-Netzen ist eine sofortige Abschaltung im Fehlerfall, beispielsweise bei einem einpoligen Erdschluss, nicht unbedingt notwendig, da der Erdschlussstrom sehr klein ist.
Allerdings erhöht sich die Spannung der beiden, nicht direkt betroffenen Phasen um den Faktor √3 gegenüber Erde. Diese gegenüber Normalbedingungen erhöhte Spannung wird als verkettete Spannung bezeichnet. Zu Beginn hat der Kaltleiter nur einen sehr kleinen Betrag an der Gesamtspannung der erfindungsgemäßen Anordnung. Dieser Spannungsabfall wird durch den fließenden Leckstrom und den entsprechenden Kaltwiderstand bestimmt.
Im gleichen Zeitfenster A fällt fast die gesamte Spannung über dem Varistor ab, wobei dieser die Leerlaufspannung begrenzt. Im Bereich B steigt der Leckstrom durch die Anordnung an und dadurch kommt es zu einem erhöhten Leistungsumsatz innerhalb der Varistoren. Diese erwärmen, durch die innige thermische Kopplung von beiden Seiten, den Kaltleiter, wodurch dieser seinen Widerstand erhöht und damit auch den betreffenden Spannungsabfall deutlich vergrößert, Durch die Widerstandserhöhung des Kaltleiters wird der Leckstrom begrenzt. Infolge der Reduzierung des Leckstroms reduziert sich auch der Spannungsbeitrag des Varistors, bis im Bereich C beide Elemente sich die Spannung teilen.

Durch den Varistor fließt dann nur noch ein minimaler Strom, wodurch nur ein kleinerer Spannungsabfall als in den Abschnitten A und B generiert wird. Der Kaltleiter hingegen besitzt in diesem Zeitabschnitt einen hohen Widerstand, wodurch sein Spannungsabfall groß gegenüber den beiden vorhergehenden Bereichen A und B ist. Die Gesamtspannung entspricht nun auch annähernd der Leerlaufspannung des speisenden Netzes.

Es können kombinatorisch zum Schutz gegen Überlastung durch zu hohe Impulsströme Sicherungen bzw. Engstellen in den Zuleitungen oder in der Abtrennvorrichtung genutzt werden. Neben der Berücksichtigung der maximalen Impulsstrombelastbarkeit der einzelnen Bauelemente ergeben sich bei dem Einsatz der Kombination Kaltleiter und Varistor keine nennenswerten Unterschiede zur Dimensionierung dieser bekannten Schutzeinrichtungen.

Als Schutzmaßnahme gegen die Überlastung durch zu hohe Verlustleistungen können u.a. auch bekannte thermische Abtrennvorrichtungen mit Niedertemperaturlot im Bereich von 80°C bis 150°C eingesetzt werden. Durch die vorgeschlagene Kombination mit einer Abtrennvorrichtung wird die Anordnung bei drohender Überlastung der Gesamtanordnung in einen sicheren Zustand überführt (Fail-Open).

Bezüglich der Belastung mit im Allgemeinen netzfrequenten Überspannungen können für den erfindungsgemäßen Überspannungsableiter folgende grundsätzliche Fälle unterschieden werden.

Transiente bzw. langandauernde Überspannung, bei der die auftretende Verlustleistung durch den Kaltleiter auf einen zulässigen Wert begrenzt werden kann, ist ein erster Fall. Eine Schädigung des Varistors kann bei kurzzeitigen hohen bzw. auch bei langanstehenden mittleren Überspannungen ausgeschlossen werden. Nach Abklingen der Überspannung besitzt der Ableiter seine uneingeschränkte Leistungsfähigkeit, eine Abtrennung des Ableiters während oder nach der Belastung ist nicht erforderlich.

In dieser beschriebenen Funktionsweise kann der Ableiter bei dauerhaften und leichten sowie mittleren Spannungsüberhöhungen, z.B. bis zum Faktor √2 bzw. √3 der Netzspannung permanent am Netz bleiben. Auch nach der Fehlerabstellung ist der Ableiter nicht in seinem Funktions- und Schutzumfang eingeschränkt. Kurzzeitig kann die Spannungserhöhung diese Werte aber auch übersteigen.

Bei Spannungsbelastungen, welche langfristig oberhalb der √3-fachen Netzspannung liegen, besteht die Gefahr, dass der Kaltleiter den Strom nicht mehr im ausreichenden Maße reduzieren kann und dass die zulässige Verlustleistung des Ableiters nach einem längeren Zeitraum überschritten wird.

In diesem Fall würde der Ableiter ohne zusätzliche Maßnahmen zerstört werden. Um dies zu vermeiden, kann der Ableiter kurzzeitig für die Zeit der überhöhten Spannungsbelastung oder dauerhaft vom Netz getrennt werden. Die Abtrennung erfolgt dabei möglichst frühzeitig, so dass eine Wiederinbetriebnahme des Ableiters möglich ist. Die Abtrennung erfolgt also vor der Zerstörung des Ableiters, um die Anforderungen an die thermische Abtrennvorrichtung zu begrenzen und um eine Beeinträchtigung der Trennstrecke durch Verschmutzungen zu vermeiden. Die schnelle Abtrennung der Anordnung erfolgt durch eine wärmetechnisch optimierte Ausführung.

Durch die erläuterte rasche Reduzierung des Leckstroms wird die Verlustleistung des erfindungsgemäßen Ableiters sehr schnell reduziert. Dieser reduzierten Verlustleistung kann der Ableiter selbst bei hohen und höchsten netzfrequenten Überspannungen mehrere Sekunden bis Minuten standhalten. Gegenüber baugleichen Varistoren ohne Kaltleiter-Zwischenlage kann der Ableiter ohne eine Schädigung eine Zeitdauer um den Faktor größer 100 bis 1000 am Netz verbleiben. Dies wiederum erlaubt auch bei hohen Spannungsbelastungen den Einsatz von einfachen thermischen Abtrennvorrichtungen mit geringem Eigenlöschvermögen. Es sind aber auch Abtrennvorrichtungen einsetzbar, welche von Hand oder automatisch wieder einschaltbar sind, da der Ableiter ja bereits deutlich vor einer Schädigung vom Netz getrennt wird und damit in seiner Leistungsfähigkeit nicht eingeschränkt ist.

Um die aufgezeigte Funktionsweise zur Erhaltung eines intakten Ableiters bei Überlast zu gewährleisten und die Leistungsfähigkeit der Bauteile des Ableiters optimal zu nutzen, sind verschiedene Maßnahmen und Abstimmungen zwischen der Varistor-Kaltleiter-Kombination und der thermischen Abtrennvorrichtung sinnvoll.

Wie erläutert, sind die Varistoren durch den erhöhten Leckstrom und dadurch auch der Kaltleiter erwärmt worden und leiten die entstehende Wärme nach außen zu den Kontaktblechen ab. Bei bisher üblichen thermischen Abtrennvorrichtungen befinden sich an den Kontaktblechen aber auch noch weitere Anschlussteile, wie z.B. der bewegliche Anschlussbügel 3 und die Kontakte 6 und 7 (Fig. 1), welche ebenfalls aus gut elektrisch und thermisch leitenden Materialien ausgeführt sind. Die entstandene Wärme wird dahin weiter abgeleitet und die Lotstelle bei manchen Belastungen nicht ausreichend schnell erwärmt, um die Anordnung rechtzeitig vom Netz zu trennen. Bei sehr schnellen Überlastungen reagiert die Lotstelle mitunter überhaupt nicht, da der Temperaturgradient zwischen Lotstelle und überhitztem Varistor zu hoch ist. Selbiges steht dem angestrebten Ziel eines möglichst intakten Ableiters trotz Abtrennung entgegen. Um den Vorteil der drastischen Begrenzung der Verlustleistung und dem damit verbundenen Zeitgewinn bis zur Überlastung des Ableiters optimal auszunutzen, erfolgt eine Optimierung der Abtrennfunktion und der Abtrennvorrichtung.

Hierfür sind im Kontaktbereich zwischen dem Varistor und der Abtrennvorrichtung Verbindungsteile aus gut elektrisch und thermisch leitenden Materialien mit geringer Wärmekapazität einzusetzen. Die Anschlussteile des anderen Teilvaristors hingegen können entweder wärmeabführend, aber auch wärmeisolierend ausgeführt sein. Der Temperaturgradient zwischen Varistor und Abtrennstelle ist möglichst gering zu halten. Vorstehendes ermöglicht eine optimale Anpassung der zulässigen Varistor- bzw. Kaltleitertemperatur mit der Betätigungstemperatur der Abtrennvorrichtung. Die Betätigungstemperatur der Abtrennvorrichtung liegt deutlich unterhalb einer den Varistor schädigenden Temperatur, damit eine sichere Abtrennung eines noch intakten Varistors möglich ist. Hinter der Abtrennstelle sollte die Ableitung der Wärme weitestgehend unterbunden werden, um einen möglichst großen Temperaturgradienten zwischen der Abtrennstelle und den nachgeordneten Anschlussteilen zu erreichen, so dass die entstandene Wärme überwiegend zum Erreichen der Reaktionstemperatur der Abtrennstelle genutzt werden kann. Eine Unterbindung der Wärmeableitung kann z.B. durch die Wahl des Materials der Anschlussleitung (z.B. der Schaltzunge) und die Platzierung und Dimensionierung der Engstelle der Abtrennvorrichtung, z.B. unmittelbar hinter der Abtrennstelle bewirkt werden.

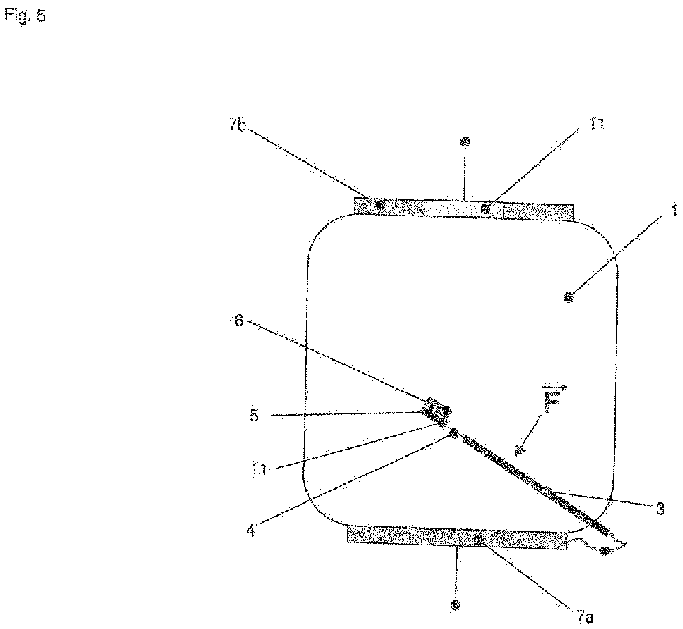

Fig. 5 zeigt eine erfindungsgemäße Ausführungsform. Gemäß dieser Darstellung erwärmt sich der Varistor 1 durch den erhöhten Leckstrom und leitet zusammen mit dem Kaltleiter seine Wärme nach außen zu den Kontaktblechen 6 und 7 ab.

Um eine weitergehende Wärmeleitung über die Lotstelle 5 hinaus zu vermeiden, werden erfindungsgemäß sogenannte Thermostops 11 eingefügt.

Durch die Thermostops 11 wird die Varistor-PTC-Kombination mit der Abtrennvorrichtung gegenüber den anderen metallischen Teilen thermisch entkoppelt. Durch diese thermische Entkopplung kommt es einerseits zu einer gleichmäßigen Erwärmung innerhalb der Anordnung und andererseits wird die Wärmeableitung in die Anschlussteile ohne weitere Funktionen unterbunden. Da die Thermostops hinter der Abtrennvorrichtung eingesetzt werden, kann diese definiert erwärmt werden und somit abgestimmt auf die Temperatur der Varistor-PTC-Anordnung abtrennen. Die Thermostops bestehen beispielsweise aus einem elektrisch gut, aber thermisch schlecht leitenden Material und bilden damit eine äußere Begrenzung der Wärmeleitung innerhalb der Anordnung, so dass die Energie zum Schmelzen der Lotstelle 5 genutzt werden kann. Diese Thermostops befinden sich zwischen den direkt auf der Anordnung platzierten Kontaktblechen und nachgeordneten Anschlussteilen.

Es besteht auch die Möglichkeit, obige Ausführungform dahingehend zu modifizieren, dass quasi im vorderen Bereich bis zur Lotstelle ein thermisch und elektrisch gut leitendes Material, z.B. Kupfer, und in dem Bereich nach den Kontaktblechen ein elektrisch gut, aber thermisch schlecht leitendes Material, z.B. Stahl, genutzt wird. Dabei kann sich der Thermostop, wie in Fig. 5 gezeigt, direkt an der Lotstelle 5 befinden oder direkt hinter der Engstelle im beweglichen Abtrennarm integriert werden. In einer weiteren Ausführungsform kann aber auch die Engstelle direkt und selbst als Thermostop dimensioniert werden.

In vorteilhafter Weise kann die Abtrennvorrichtung durch die Widerstandserhöhung des Kaltleiters und die damit verbundene Stromreduzierung bei relativ kleinen Stromamplituden öffnen, wodurch eine sichere Abschaltung ohne oder mit einem kleinen Schaltlichtbogen gewährleistet wird. Des Weiteren muss das Schaltvermögen der Abtrennvorrichtung auch bei größeren prospektiven Folgeströmen nicht proportional angepasst werden.

Die in den üblichen thermischen Abtrennvorrichtungen des Standes der Technik angeordnete Engstelle kann auch bei der erfindungsgemäßen Ausführungsform zum Schutz des Ableiters genutzt werden. Durch den direkten Einsatz des Kaltleiters im Querzweig zum betreffenden Verbraucher fließt über den Kaltleiter auch ein entsprechender Impulsstrom. Die Impulsstromtragfähigkeit liegt begründet duchr die thermische Durchbruchspannung des Kaltleiters unter der Tragfähigkeit des eingesetzten Varistors. Um die Anordnung vor einer unzulässigen Impulsbelastung zu schützen, wird die in der Abtrennvorrichtung integrierte Engstelle mit ihrem Stromquadratintegral derart angepasst, dass es zu einem adiabatischen Schmelzvorgang derselben kommt, wenn eine Impulsbelastung über dem Tragvermögen des integrierten Kaltleiters vorliegt.

In einer weiteren vorteilhaften Ausführungsform der Anordnung des Ableiters mit der Sandwich-Kombination Varistor und PTC kann zusätzlich ein Gasentladungsableiter oder eine Funkenstrecke in Reihe geschalten werden. Besitzt der Ableiter eine Abtrennvorrichtung, ist der Gasentladungsableiter so anzuordnen, dass die thermische Abstimmung zwischen Varistor und thermischer Trennstelle nicht gestört wird.

Der Vorteil einer solchen Anordnung erweist sich bei hohen netzfrequenten Überspannungen und insbesondere auch bei Anwendungen im Gleichspannungsbereich. Die Kombination ermöglicht hier eine Ausdehnung des reversiblen Verhaltens ohne Abtrennung bis hin zu hohen Überlasten. Die Basis hierfür bildet die sehr schnelle Reaktionszeit des Kaltleiters und die Löscheigenschaften des Gasableiters bei Wechsel- und Gleichströmen. Darüber hinaus ermöglicht die Kombination des Ableiters mit einem Gasableiter auch eine weitere Abstimmung des Kaltleiters.

So können Kaltleiter-Materialien bzw. -Abmessungen mit zwar begrenzter Widerstandserhöhung, jedoch extrem schneller Reaktionszeit und hoher Impulsleistungsfähigkeit eingesetzt werden. Die Vorteile und die Funktionweise einer solchen Kombination ist nachfolgend beschrieben.
Die zulässige dauerhafte Verlustleistung des Varistors und des Kaltleiters wird bereits bei dauerhaften Strömen von wenigen mA überschritten. Zur Sicherheit müsste die vorliegende erfindungsgemäße Lösung bei solchen Belastungen daher vom Netz getrennt werden. Dieser Fall kann dann eintreten, wenn die Möglichkeiten zur Erhöhung des Widerstandswerts des Kaltleiters ausgelastet sind. Dies ist bei sehr hohen Spannungsbelastungen bzw. bei begrenzter Möglichkeit zur Widerstandserhöhung des Kaltleiters gegeben.

Gasableiter, Funkenstrecken mit Luft bzw. insbesondere Vakuum besitzen die Eigenschaft, dass Ströme kleiner Amplitude selbsttätig verlöschen. Dieses Phänomen wird häufig auch als Stromabriss bezeichnet und erfordert keinen natürlichen oder erzwungenen Stromnulldurchgang. Die Höhe der Ströme, welche quasi selbsttätig verlöschen, kann dabei bis zu mehreren Ampere betragen. Die Höhe wird durch das Elektrodenmaterial, das Gas und den Druck bestimmt und ist nur geringfägig von den vorangegangenen Belastungen, bezogen auf den Nennleistungsbereich des Gerätes, abhängig. Die Ströme zwischen Überlastung des Varistors und dem Stromabriss der genannten Bauteile differieren somit um mehrere Potenzen. Um diese Differenz des notwendigen Widerstandshubs wird der Kaltleiter somit entlastet. In der Kombination Varistor / Kaltleiter mit einem Gasableiter bzw. einer Funkenstrecke wird der Varistor und der Kaltleiter bei Erreichen des Abrisstroms somit schlagartig entlastet. Letzteres erlaubt die Ausdehnung des reversiblen Bereichs bis zu höheren Belastungen bzw. die Auslegung des Kaltleiters für schnellste Reaktionszeiten. Zudem wird die Belastung des Ableiters insgesamt reduziert und damit die Lebensdauer erhöht.

Die erläuterte Funktionsweise der beschriebenen Kombination erlaubt bei Wechselspannungsnetzen die Löschung des Leckstroms vor einem Stromnulldurchgang. Der besondere Vorteil dieser Kombination wird jedoch vor allem auch in Gleichspannungsnetzen deutlich, da dort die notwendige Belastung des Kaltleiters deutlich reduziert werden kann. Dies führt bezüglich des Überlastverhaltens zu einer deutlichen Leistungssteigerung und zu einer Verlängerung der Lebensdauer.

Ergänzend sei angemerkt, dass das Kaltleiterbauelement in seinem Kaltwiderstand, seiner Wärmekapazität, seiner Bezugstemperatur und der Steilheit seiner Widerstands-Temperatur-Kennlinie so dimensioniert ist, dass im Fall transienter Überspannungen mindestens bis zum √3-Fachen der Nennspannung der Strom durch den Überspannungsableiter auf ein solches Maß begrenzt wird, dass sich das Varistorbauelement deutlich unterhalb einer den Varistor zerstörenden Temperatur stabilisiert und so vor Zerstörung geschützt wird.

Die Kombination ist in ihrer Spannungsfestigkeit so dimensioniert, dass es im Fall transienter Überspannungen bis zum √3-Fachen der Nennspannung für einen Zeitraum von mindestens einigen 10 s nicht zu einem Durchschlag der Elemente kommt und in der Folge durch die Verlustleistung der Varistor-Kaltleiter-Kombination die thermische Abtrennvorrichtung sicher auslösen kann, so dass die irreversible Zerstörung des Bauelements verhinderbar ist.

## Patentansprüche

1. Überspannungsableiter mit integrierter Schutzvorrichtung, insbesondere gegen langandauernde, netzfrequente Überspannungen (TOV), umfassend mindestens einen Varistor (1) und einen Kaltleiter (9) (PTC-Widerstand), welcher mit dem Varistor (1) in thermischem Kontakt steht und wobei der Varistor (1) und Kaltleiter (9) elektrisch in Reihe geschaltet sind, **dadurch gekennzeichnet, dass**
eine Varistorscheibe (1) mit einer keramischen Scheibe (9) mit Kaltleiterverhalten in Sandwichbauweise ausgeführt ist, wobei einem der Elemente eine, auch reversible, thermische Abtrennvorrichtung (2) zugeordnet ist und das jeweils andere Element eine äußere Wärmeisolation (10; 11) aufweist, um umgesetzte Wärmeenergie primär dem Kaltleiter (9) und der Abtrennvorrichtung (2) zuzuführen.

## Claims

1. A surge arrester having an integrated protection device, in particular against long-lasting mains frequency overvoltage (TOV), comprising at least one varistor (1) and a cold conductor (9) (PTC resistor) which is in thermal contact with the varistor (1), and wherein the varistor (1) and the cold conductor (9) are electrically connected in series, **characterized in that**
a varistor disc (1) having a ceramic disc (9) with cold conductor behavior is realized in sandwich construction, wherein an, even reversible, thermal disconnecting device (2) is assigned to one of the elements, and the respective other element has an exterior heat insulation means (10; 11) in order to feed primarily the cold conductor (9) and the disconnecting device (2) with converted heat energy.

## Revendications

1. Dérivateur de surtensions avec dispositif de protection intégré, en particulier à l'encontre de surtensions de longue durée et fréquentes dans le réseau (TOV), comprenant au moins un varistor (1) et une thermistance (9) (résistance à coefficient de température positif), qui est en contact thermique avec le varistor (1) et dans lequel le varistor (1) et la thermistance (9) sont branchés électriquement en série,
**caractérisé en ce que**
une plaque de varistor (1) est réalisée dans une structure en sandwich avec une plaque céramique (9) avec comportement de thermistance, et un dispositif de coupure thermique (2), également réversible, est associé à l'un des éléments, et l'autre élément respectif comporte une isolation thermique extérieure (10 ; 11), afin d'amener l'énergie thermique convertie principalement à la thermistance (9) et au dispositif de coupure (2).
